# EUROPEAN PATENT APPLICATION

(11) **EP 4 779 596 A1**
(43) Date of publication of application: **22.07.2026**
(21) Application number: 25194458.3
(22) Date of filing: 06.08.2025
(51) Int. Cl.: G06V 30/10, H04R 1/10, G06F 3/01, G06F 3/16, G10L 15/26

(54) **HEADSET-BASED TEXT RECOGNITION METHOD, DEVICE, HEADSET, STORAGE MEDIUM AND PROGRAM PRODUCT**

(30) Priority: 17.01.2025 CN 202510081107
(71) Applicant: Beijing Zitiao Network Technology Co., Ltd., Beijing 100190 (CN)
(72) Inventor: LI, Haoqian, Beijing, 100028 (CN); CAI, Wei, Beijing, 100028 (CN); XIA, Qing, Beijing, 100028 (CN); WANG, Huichao, Beijing, 100028 (CN); LI, Mingyang, Beijing, 100028 (CN); LI, Jun, Beijing, 100028 (CN)
(74) Representative: Marks & Clerk LLP

(57) **Abstract**

Embodiments of the present disclosure proposes a headset-based text recognition method, apparatus, headset, storage medium and program product, and relates to the field of headset technology. The method is applied to a processing unit, and includes: when it is detected that a text recognition mode is triggered, sending a shooting instruction to a camera unit, so that the camera unit can acquire at least one image to be recognized of the recognized object according to the shooting instruction; receiving the at least one image to be recognized sent by the camera unit; inputting the at least one image to be recognized into a preset text recognition model, so that the preset text recognition model can recognize the image to be recognized, so as to obtain text content; and outputting the text content.

## Description

### TECHNICAL FIELD

Embodiments of the present disclosure relate to the field of headset technology, and in particular, to a headset-based text recognition method, device, headset, storage medium and program product.

### BACKGROUND

With the development of headset-related technologies, the headset has evolved from a single audio playback device into an intelligent wearable device that combines communication interaction, audio optimization and other functions.

### SUMMARY

Embodiments of the present disclosure provide a headset-based text recognition method, apparatus, headset, storage medium and program product, so as to solve the problem that current headsets do not yet have the function of text recognition.

In a first aspect, an embodiment of the present disclosure provides a headset-based text recognition method, wherein the headset includes a processing unit and a camera unit, and the processing unit is locally deployed with a preset text recognition model, the method being applied to the processing unit and including: in response to detecting that a text recognition mode is triggered, sending a shooting instruction to the camera unit, so that the camera unit acquires at least one image to be recognized of a recognized object according to the shooting instruction; receiving the at least one image to be recognized sent by the camera unit; inputting the at least one image to be recognized into the preset text recognition model, so that the preset text recognition model recognizes the image to be recognized, for obtaining text content; and outputting the text content.

In a second aspect, an embodiment of the present disclosure provides a headset, including: a processing unit and a camera unit; the processing unit being configured to execute the headset-based text recognition method as described in the first aspect.

In a third aspect, an embodiment of the present disclosure provides a headset-based text recognition apparatus, wherein the headset includes a processing unit and a camera unit, and the processing unit is locally deployed with a preset text recognition model, the headset-based text recognition apparatus being applied to the processing unit and including: an instruction sending module configured to, in response to detecting that a text recognition mode is triggered, send a shooting instruction to the camera unit, so that the camera unit acquires at least one image to be recognized of a recognized object according to the shooting instruction; an image receiving module configured to receive at least one image to be recognized sent by the camera unit; an image recognition module configured to input at least one image to be recognized into the preset text recognition model, so that the preset text recognition model recognizes the image to be recognized, for obtaining text content; and a content outputting module configured to output the text content.

In a fourth aspect, an embodiment of the present disclosure provides a computer-readable storage medium storing computer-executable instructions therein, and a processor, when executing the computer-executable instructions, implements the headset-based text recognition method as described in the above first aspect and various possible designs of the first aspect.

In a fifth aspect, an embodiment of the present disclosure provides a computer program product, including a computer program which, when executed by a processor, cause implementation of the headset-based text recognition method as described in the above first aspect.

### BRIEF DESCRIPTION OF THE DRAWINGS

In order to more clearly explain technical solutions in the embodiments of the present disclosure or in the prior art, the drawings needed in the description of the embodiments or the prior art will be briefly introduced below, it is obvious that the drawings described below are some embodiments of the present disclosure, and for those skilled in the art, other drawings can also be obtained based on these drawings without paying creative work.
Fig. 1 is a scenario schematic diagram of a headset-based text recognition method provided by the present disclosure;
Fig. 2 is a flowchart schematic diagram of a headset-based text recognition method provided by an embodiment of the present disclosure;
Fig. 3 is a structural schematic diagram of a headset-based text recognition apparatus provided by an embodiment of the present disclosure.

### DETAILED DESCRIPTION

In order to make the purposes, technical solutions and advantages of the embodiments of the present disclosure clearer, the technical solutions in the embodiments of the present disclosure will be clearly and completely described below with reference to the drawings in the embodiments of the present disclosure, obviously, the embodiments described are part of the embodiments of the present disclosure, rather than all of the embodiments. All other embodiments, that are obtained by those skilled in the art based on the embodiments in the present disclosure without paying creative work, fall within the scope of protection of the present disclosure.

With continuous innovation and progress of headset-related technologies, the headset has evolved from a single audio playback device into an intelligent wearable device that combines communication interaction, audio optimization and a variety of advanced functions. However, current headsets do not yet implement text recognition, and there is an urgent need for a method capable of implementing text recognition through a headset.

The present disclosure is appliable to a scenario of text recognition based on a headset. It should be noted that user information (including but not limited to user device information, user personal information, etc.) and data (including but not limited to data for analysis, storage, presentation, etc.) involved in the present disclosure are all information and data authorized by the user or fully authorized by all parties, and the collection, usage and processing of relevant data need to comply with relevant laws, regulations and standards, and provide corresponding operation entries for users to choose authorization or rejection.

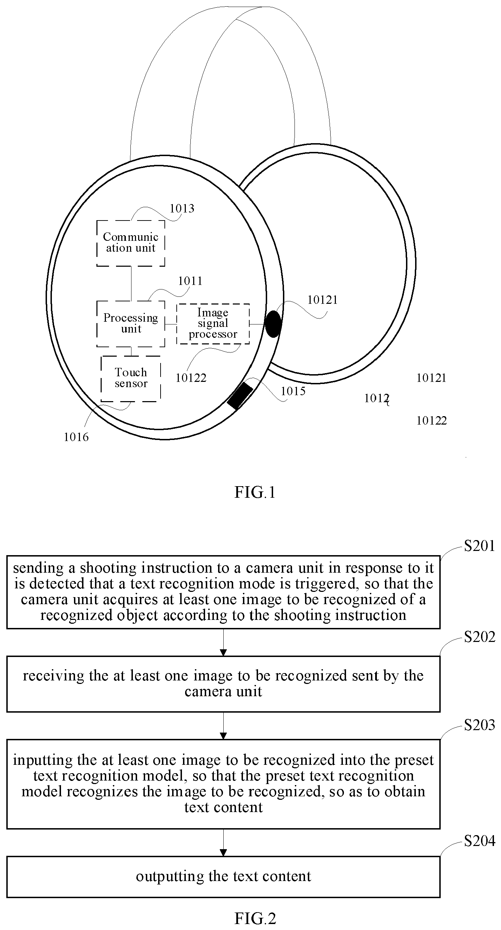

Fig. 1 is a scenario schematic diagram of a headset-based text recognition method provided by the present disclosure. As shown in Fig. 1, the scenario includes: a headset 101. The headset 101 includes a processing unit 1011 and a camera unit 1012.

In a specific implementation, the headset 101 may include a headphone, a separate headset, a wired headset, and so on. In working processes, the headset 101 may be worn at user ears or a head. The processing unit 101 may include a processor, a Bluetooth SOC (System on Chip), and so on. The camera unit 1012 may include an image acquisition unit, an image processing unit, and so on.

A user triggers a text recognition mode of the headset in working processes of the headset, the processing unit 1011 in the headset 101 is configured to detect that the text recognition mode is triggered, control the camera unit 1012 to capture to-be-recognized images, recognize text in the to-be-recognized image, obtain text content, and output the text content.

It can be understood that the scenario illustrated in embodiments of the present disclosure does not constitute any specific limitation on the headset-based text recognition method. In other feasible implementations in the present disclosure, the above scenario may include more or fewer components than those shown in the drawings, or combine some components, or split some components, or arrange different components, which may be determined according to actual application scenarios, and no limitation is made herein. The scenario shown in FIG. 1 may be implemented by hardware, software, or a combination of software and hardware.

The technical solution of the present application and how the technical solution of the present application solves the above technical problems will be described in detail below with reference to specific embodiments. The following several specific embodiments may be combined with each other, and the same or similar concepts or processes may not be redundantly described in some embodiments. The embodiments of the present application will be described below in conjunction with the drawings.

FIG. 2 is a flowchart illustrating a headset-based text recognition method provided by an embodiment of the present application. An execution subject of the embodiment of the present application embodiment may be the processing unit 1011 in FIG. 1, which is not particularly limited in the embodiments. As shown in FIG. 2, the method includes: steps S201 to S204.

S201: in response to detecting that a text recognition mode is triggered, sending a shooting instruction to a camera unit, so that the camera unit acquires at least one image to be recognized of a recognized object according to the shooting instruction.

In this step, detecting that the text recognition mode is triggered may include detecting that a user triggers a button of the headset, that the user inputs an instruction of starting the text recognition mode, and so on. The shooting instruction may be preset. The camera unit captures an image, and the image contains an object to be recognized faced by the user.

S202: receiving at least one image to be recognized sent by the camera unit.

In this step, the processing unit receives the image to be recognized through receiving electric signals, data packets, files, and so on.

S203: inputting the at least one image to be recognized into a preset text recognition model, so that the preset text recognition model can recognize the image to be recognized, thereby obtaining text content.

In this step, the preset text recognition model may be an OCR (Optical Character Recognition) model pre-trained by staff.

S204: outputting the text content.

In this step, outputting the text content may include converting the text content into audio and outputting the converted audio, and may also include sending the text content to terminal devices such as a mobile phone, a tablet computer, and a computer, so as to cause the terminal device to output the text content.

From the description of the above embodiment, it can be known that the embodiment of the present disclosure can realize text recognition by the headset through acquiring images to be recognized by the camera unit of the headset and recognizing the images to be recognized by the processing unit in the headset to obtain text content, thereby expanding functions of the headset, and compared to adopting an terminal device for text recognition in related technologies, operations that users need to adopt terminal devices to unlock and align target objects to be recognized and the like can be reduced, while only requiring the user's head to face an object to be recognized and then triggering a text recognition mode, thereby reducing the operation steps. In addition, since a preset text recognition model is locally deployed in the processing unit of the headset, images captured by the headset do not need to be sent to the terminal device to perform text recognition, thereby reducing delay caused by the process of transmitting images, allowing the user to quickly obtain a text recognition result only through the headset, and improving real-time performance of the user obtaining text information.

In a possible implementation, the camera unit 1012 includes an image acquisition unit 10121 and an image signal processor 10122.

The image acquisition unit 10121 may be composed of a lens, an image sensor, an aperture, and so on. The image signal processor 10122 may be composed of a CPU (Central Processing Unit), a DIS (De-Interlace) module, a CSC (Color Space Conversion) module, and so on.

In the above step S202, the sending a shooting instruction to a camera unit in response to it is detected that a text recognition mode is triggered, so that the camera unit acquires at least one image to be recognized of a recognized object according to the shooting instruction, includes: step S2021.

S202A1: in response to it is detected that the text recognition mode is triggered, sending the shooting instruction to the image acquisition unit, so that the image acquisition unit acquires at least one original image of the recognized object according to the shooting instruction, and sending the at least one original image to the image signal processor, so that the image signal processor optimizes the at least one original image to obtain the at least one image to be recognized.

In this step, the image signal processor may optimize the original image through denoising, color adjustment, image augmentation, and so on, thereby obtaining the image to be recognized.

From the description of the above embodiments, it can be known that the embodiments of the present disclosure acquire an original image by the image acquisition unit, optimize the original image by the image signal processor, thereby obtaining an image to be recognized, thereby obtaining a picture more suitable for text recognition.

In a possible implementation, the headset may further include a communication unit 1013.

The communication unit may include any one of a Bluetooth module, a Wi-Fi module, and so on.

Correspondingly, in the above step S204, outputting the text content, includes: step S204A.

S204A: sending the text content to the communication unit, so that the communication unit transmits the text content to a terminal device, so as to cause the terminal device to output the text content.

In this step, the processing unit may send the text content to the communication unit in formats such as a message, a data packet, etc. The communication unit is communicatively connected with the terminal device, and the terminal device may display and output the text content, and may also convert the text content into speech and then output the speech.

From the description of the above embodiments, it is known that the embodiments of the present disclosure send the recognized text content to the terminal device through setting the communication unit, and output the text content by the terminal device, thereby enabling the user to see or hear the recognized content at the terminal device.

In a possible implementation, the headset may further include an audio playback unit 1014.

The audio playback unit may include at least one speaker.

Correspondingly, in the above step S204, outputting the text content may include: step S204B1 and step S204B2.

S204B1: converting the text content into audio.

In this step, it may include inputting the text content into a preset audio generation model, thereby obtaining the audio output by the audio generation model.

S204B2: sending the audio to the audio playback unit, so that the audio playback unit outputs the audio.

In this step, it may include send the audio to the audio playback unit in formats such as data packets, messages, etc., thereby enabling the audio playback unit to output corresponding audio; or it may include inputting an electrical signal corresponding to the audio into the audio playback unit, thereby enabling the audio playback unit to output corresponding audio.

From the description of the above embodiments, it is known that the embodiments of the present disclosure convert the text content into audio and then send the audio to the audio playback unit, thereby enabling the headset itself to perform text-to-speech conversion, reducing the time for interacting with the terminal device, and increasing the output speed of audio.

In a possible implementation, the headset may further include the communication unit 1013 and the audio playback unit 1014.

Correspondingly, in the above step S204, outputting the text content includes: steps S204C1 to S204C3.

S204C1: sending the text content to the communication unit, so that the communication unit transmits the text content to a terminal device, so that the terminal device converts the text content into audio and sends the audio to the communication unit.

In this step, the communication unit may send the text content to the terminal device via Bluetooth or other connection manners, and the terminal device may convert the text content into audio by using a preset text-to-speech conversion program. The way in which the terminal device sends the audio to the communication unit in the headset is similar to the way in which the communication unit sends the text content to the terminal device.

S204C2: receiving the audio sent by the communication unit.

In this step, the audio may be received through receiving data in formats such as messages, data packets, etc.

S204C3: inputting the audio to the audio playback unit, so that the audio playback unit outputs the audio.

This step is similar to the above step S204B2, and will not be described herein again.

From the description of the above embodiments, it is known that the embodiments of the present disclosure send the text content to the terminal device via the communication unit, enable the terminal device to convert the text content into audio and return the audio to the headset, and then enable the headset to output the audio, thereby reducing the power consumption of the headset when converting the text content into audio, and extending the standby time of the headset.

In a possible implementation, after in the above step S203, inputting the at least one image to be recognized into the preset text recognition model, so that the preset text recognition model recognizes the image to be recognized, so as to obtain text content, it may further include: steps S221 and S222.

S221: translating the text content into a preset language, thereby obtaining a translation result.

In this step, it may include inputting the text content into a translation program, thereby obtaining a translation result output by the translation program translating the text content into a preset language.

S222: outputting the translation result.

In this step, it may include converting the translation result into speech, and outputting the converted speech; or it may include sending the translation result to the terminal device via the communication unit, so that the terminal device displays the translation result or outputs the translation result in speech; or it may include sending the translation result to the terminal device via the communication unit, the terminal device converts the translation result into audio, the communication unit receives the audio sent by the terminal device and sends the audio to the processing unit, the processing unit inputs the audio into the audio playback unit, thereby the audio playback unit outputs corresponding audio.

From the description of the above embodiments, it is known that the embodiments of the present disclosure translate the text content recognized after text recognition, obtain and output the translation result, thereby after text recognition performed by the headset, directly implementing translation and output after translation, which reduces the time for using translation.

In a possible implementation, the headset may further include an audio input unit 1015.

The audio input unit 1015 may include any type of microphone.

The headset-based text recognition method may further include:
S230: receiving speech information sent by the audio input unit, wherein the speech information is obtained by the audio input unit detecting user's speech.

In this step, the speech information may be realized through receiving an electrical signal, data packet, message, etc. The audio input unit may convert the detected user's speech into an electrical signal or into a data packet, message, etc.

S231: inputting the speech information to a speech recognition model, so that the speech recognition model recognizes the speech information, to obtain a recognition result.

In this step, the speech recognition model may be pre-trained and stored in the headset by staff.

S232: determining that the text recognition mode is triggered, in response to the recognition result comprising a preset field.

In this step, the preset field may be a field pre-specified by staff, for example, "recognition", "translation", "extraction", "what was written", etc.

From the description of the above embodiments, it is known that the embodiments of the present disclosure implement triggering of the text recognition mode through speech recognition, thereby realizing text recognition using the headset without manual operation by the user, and reducing the user's operation steps during text recognition.

In a possible implementation, the headset may further include a touch sensor 1016.

The touch sensor 1016 may include a capacitive sensor, an acceleration sensor, an optical sensor, etc.

The headset-based text recognition method may further include:
S240: receiving a touch signal sent by the touch sensor, wherein the touch signal is sent by the touch sensor upon detecting a user's touch.

In this step, the touch signal may include an electrical signal.

S241: If the touch signal meets a preset trigger condition, determining that the text recognition mode is triggered.

In this step, for example, continuously receiving the touch signal, the received touch signal meeting a preset frequency requirement, an intensity change of the touch signal meeting a preset requirement, etc.

From the description of the above embodiments, it is known that the embodiments of the present disclosure receive the touch signal, judge whether the touch signal meets the trigger condition, and determine that the text recognition mode is triggered if the trigger condition is met, thereby realizing touch control to start the text recognition mode of the headset, and also implementing text recognition when the user conveniently triggers the text recognition mode in speech.

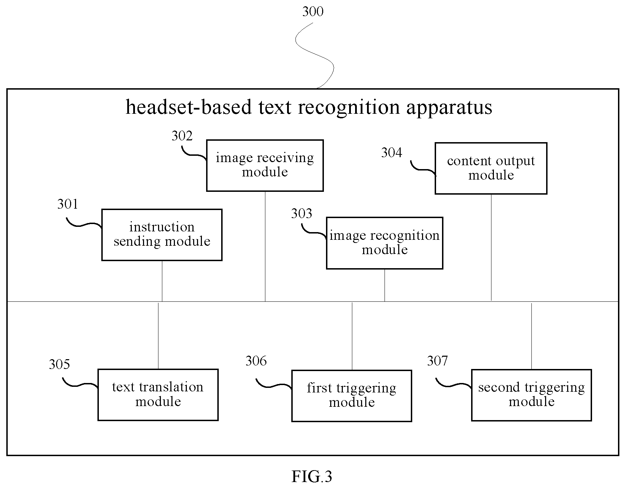

FIG. 3 is a structural schematic diagram of a headset-based text recognition apparatus provided in an embodiment of the present disclosure. As shown in FIG. 3, the headset-based text recognition apparatus 300 can be applied to a processing unit and includes: an instruction sending module 301, an image receiving module 302, an image recognition module 303, and a content output module 304.

The instruction sending module 301 is configured to send a shooting instruction to a camera unit in response to it is detected that a text recognition mode is triggered, so that the camera unit acquires at least one image to be recognized of a recognized object according to the shooting instruction;
The image receiving module 302 is configured to receive the at least one image to be recognized sent by the camera unit;
The image recognition module303 is configured to input the at least one image to be recognized into the preset text recognition model, so that the preset text recognition model recognizes the image to be recognized, so as to obtain text content; and
The content output module 304 is configured to output the text content.

The apparatus provided in the embodiment can be used to implement the technical solutions of the method embodiments described above, and its implementation principle and technical effect are similar, which will not be repeated here in the embodiment.

In a possible implementation, the instruction sending module 301 can be specifically configured to send the shooting instruction to the image acquisition unit in response to it is detected that the text recognition mode is triggered, so that the image acquisition unit acquires at least one original image of the recognized object according to the shooting instruction, and send the at least one original image to the image signal processor, so that the image signal processor optimizes the at least one original image to obtain the at least one image to be recognized.

In a possible implementation, the headset further includes a communication unit; correspondingly, the content output module 304 may be specifically configured to send the text content to the communication unit, so that the communication unit transmits the text content to a terminal device, so as to enable the terminal device to output the text content.

In a possible implementation, the headset further includes an audio playback unit; correspondingly, the content output module 304 may be specifically configured to convert the text content into audio; send the audio to the audio playback unit, so that the audio playback unit outputs the audio.

In a possible implementation, the headset further includes a communication unit and an audio playback unit; correspondingly, the content output module 304 may be specifically configured to send the text content to the communication unit, so that the communication unit transmits the text content to a terminal device, so as to enable the terminal device to convert the text content into audio, and send the audio to the communication unit; receive audio sent by the communication unit; input the audio into the audio playback unit, so that the audio playback unit outputs the audio.

In a possible implementation, the headset-based text recognition apparatus 300 further includes: a text translation module 305.

The text translation module 305 may be configured to translate the text content into a preset language, thereby obtaining a translation result; output the translation result.

In a possible implementation, the headset further includes an audio input unit; the headset-based text recognition apparatus 300 further includes: a first triggering module 306.

The first triggering module 306 may be configured to receive speech information sent by the audio input unit, wherein the speech information is obtained by the audio input unit detecting user's speech; input the speech information to a speech recognition model, so that the speech recognition model recognizes the speech information, to obtain a recognition result; determine that the text recognition mode is triggered, in response to the recognition result comprising a preset field.

In a possible implementation, the headset further includes a touch sensor; the headset-based text recognition apparatus 300 further includes: a second triggering module 307.

The second triggering module 307 may be configured to receive a touch signal sent by the touch sensor, wherein the touch signal is sent by the touch sensor upon detecting user's touch; determine that the text recognition mode is triggered, in response to the touch signal meeting a preset trigger condition.

The apparatuses provided in the embodiments can be used to implement the technical solutions of the method embodiments described above, and their implementation principle and technical effect are similar, which will not be repeated here in the embodiments.

Continuing to refer to FIG. 1. The present disclosure also provides an headset. As shown in FIG. 1, the headset 101 includes a processing unit 1011 and a camera unit 1012.

The processing unit is configured to perform the headset-based text recognition method as described in any of the above embodiments.

In a possible implementation, the camera unit 1012 includes an image acquisition unit 10121 and an image signal processor 10122.

In a possible implementation, the headset 101 further includes: a communication unit 1013, an audio playback unit 1014, an audio input unit 1015, and a touch sensor 1016.

In a possible implementation, the camera unit 102 is installed on the front side of the headset, wherein the shooting direction of the camera unit is consistent with the orientation of a user when wearing the headset.

The present disclosure also provides a computer-readable storage medium, which stores computer-executable instructions, a processor, when executing the computer-executable instructions, can implement the technical solution of the headset-based text recognition method in any of the above embodiments. Its implementation principle and beneficial effects are similar to those of the headset-based text recognition method, which may refer to the implementation principle and beneficial effects of the headset-based text recognition method, and will not be repeated here.

The present disclosure also provides a computer program product, including a computer program, the computer program, when executed by a processor, cause the technical solution of the headset-based text recognition method in any of the above embodiments to be implemented. Its implementation principle and beneficial effects are similar to those of the headset-based text recognition method, which may refer to the implementation principle and beneficial effects of the headset-based text recognition method, and will not be repeated here.

In a first aspect, according to one or more embodiments of the present disclosure, there is provided a headset-based text recognition method, wherein the headset includes a processing unit and a camera unit, and the processing unit is locally deployed with a preset text recognition model, the method being applied to the processing unit and including: in response to detecting that a text recognition mode is triggered, sending a shooting instruction to the camera unit, so that the camera unit acquires at least one image to be recognized of a recognized object according to the shooting instruction; receiving the at least one image to be recognized sent by the camera unit; inputting the at least one image to be recognized into the preset text recognition model, so that the preset text recognition model recognizes the image to be recognized, for obtaining text content; and outputting the text content.

In a possible implementation, the camera unit includes an image acquisition unit and an image signal processor; the sending a shooting instruction to a camera unit in response to it is detected that a text recognition mode is triggered, so that the camera unit acquires at least one image to be recognized of a recognized object according to the shooting instruction, comprises: sending the shooting instruction to the image acquisition unit in response to it is detected that the text recognition mode is triggered, so that the image acquisition unit acquires at least one original image of the recognized object according to the shooting instruction, and send the at least one original image to the image signal processor, so that the image signal processor optimizes the at least one original image to obtain the at least one image to be recognized.

In a possible implementation, the headset further includes a communication unit; wherein the outputting the text content, includes: sending the text content to the communication unit, so that the communication unit transmits the text content to a terminal device, so as to cause the terminal device to output the text content.

In a possible implementation, the headset further includes an audio playback unit; wherein the outputting the text content, includes: converting the text content into audio; sending the audio to the audio playback unit, so as to cause the audio playback unit to output the audio.

In a possible implementation, the headset further includes a communication unit and an audio playback unit; wherein the outputting the text content, includes: sending the text content to the communication unit, so that the communication unit transmits the text content to a terminal device, so as to cause the terminal device to convert the text content into audio and send the audio to the communication unit; receiving the audio sent by the communication unit; inputting the audio to the audio playback unit, so as to cause the audio playback unit to output the audio.

In a possible implementation, after inputting the at least one image to be recognized into the preset text recognition model, so that the preset text recognition model recognizes the image to be recognized, so as to obtain text content, the method further includes: translating the text content into a preset language, thereby obtaining a translation result; outputting the translation result.

In a possible implementation, wherein the headset further comprises an audio input unit; the method further includes: receiving speech information sent by the audio input unit, wherein the speech information is obtained by the audio input unit detecting user's speech; inputting the speech information to a speech recognition model, so that the speech recognition model recognizes the speech information, to obtain a recognition result; determining that the text recognition mode is triggered, in response to the recognition result comprising a preset field.

In a possible implementation, wherein the headset further comprises a touch sensor; the method further includes: receiving a touch signal sent by the touch sensor, wherein the touch signal is sent by the touch sensor upon detecting user's touch; determining that the text recognition mode is triggered, in response to the touch signal meeting a preset trigger condition.

In a second aspect, according to one or more embodiments of the present disclosure, a headset is provided, including: a processing unit and a camera unit; the processing unit is configured to perform the headset-based text recognition method according to the first aspect.

In a possible implementation, the camera unit includes: an image acquisition unit and an image signal processor.

In a possible implementation, the headset further includes: a communication unit, an audio playback unit, an audio input unit, and a touch sensor.

In a possible implementation, the camera unit is installed on a front side of the headset, where a shooting direction of the camera unit is consistent with a direction in which a user faces when wearing the headset.

In a third aspect, according to one or more embodiments of the present disclosure, a headset-based text recognition apparatus is provided, wherein the headset comprises a processing unit and a camera unit, wherein the processing unit is locally deployed with a preset text recognition model, the headset-based text recognition apparatus is applied to the processing unit, including: an instruction sending module, configured to send a shooting instruction to a camera unit in response to it is detected that a text recognition mode is triggered, so that the camera unit acquires at least one image to be recognized of a recognized object according to the shooting instruction; an image receiving module, configured to receive the at least one image to be recognized sent by the camera unit; an image recognition module, configured to input the at least one image to be recognized into the preset text recognition model, so that the preset text recognition model recognizes the image to be recognized, so as to obtain text content; and a content output module, configured to output the text content.

In a fourth aspect, according to one or more embodiments of the present disclosure, a computer-readable storage medium is provided, the computer-readable storage medium stores computer-executable instructions, and a processor, when executing the computer-executable instructions, implements the headset-based text recognition method described in the first aspect.

In a fifth aspect, according to one or more embodiments of the present disclosure, a computer program product is provided, including a computer program, which, when executed by a processor, causes the headset-based text recognition method described in the first aspect to be implemented.

The foregoing description is merely exemplary implementations of this disclosure, and is not intended to limit the protection scope of this disclosure. It should be understood that the protection scope of this disclosure is not limited to technical solutions formed by specific combinations of the technical features described above, but also covers other technical solutions formed by any combination of the technical features or their equivalent features without departing from the concept of this disclosure. For example, technical solutions formed by mutual replacement between the features described above and technical features having similar functions disclosed in this disclosure (but not limited to).

In addition, although operations have been depicted in a particular order, this should not be understood as requiring that these operations be performed in the particular order shown or in sequential order, or that all illustrated operations be performed to achieve the desired result. In certain environments, multitasking and parallel processing may be advantageous. Similarly, although several specific implementation details are included in the above discussion, these should not be interpreted as limitations on the scope of this disclosure. Certain features described in the context of separate implementations can also be implemented in combination in a single implementation. Conversely, various features described in the context of a single implementation can also be implemented separately or in any suitable sub-combination in multiple implementations.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A headset-based text recognition method, wherein the headset comprises a processing unit and a camera unit, wherein the processing unit is locally deployed with a preset text recognition model,
the method is applied to the processing unit, and comprises:
sending a shooting instruction to a camera unit in response to it is detected that a text recognition mode is triggered, so that the camera unit acquires at least one image to be recognized of a recognized object according to the shooting instruction;
receiving the at least one image to be recognized sent by the camera unit;
inputting the at least one image to be recognized into the preset text recognition model, so that the preset text recognition model recognizes the image to be recognized, so as to obtain text content; and
outputting the text content.

2. The method of claim 1, wherein the camera unit comprises an image acquisition unit and an image signal processor;
the sending a shooting instruction to a camera unit in response to it is detected that a text recognition mode is triggered, so that the camera unit acquires at least one image to be recognized of a recognized object according to the shooting instruction, comprises:
sending the shooting instruction to the image acquisition unit in response to it is detected that the text recognition mode is triggered, so that the image acquisition unit acquires at least one original image of the recognized object according to the shooting instruction, and send the at least one original image to the image signal processor, so that the image signal processor optimizes the at least one original image to obtain the at least one image to be recognized.

3. The method of claim 1, wherein the headset further comprises a communication unit;
wherein the outputting the text content, comprises:
sending the text content to the communication unit, so that the communication unit transmits the text content to a terminal device, so as to cause the terminal device to output the text content.

4. The method of claim 1, wherein the headset further comprises an audio playback unit;
wherein the outputting the text content, comprises:
converting the text content into audio;
sending the audio to the audio playback unit, so that the audio playback unit outputs the audio.

5. The method of claim 1, wherein the headset further comprises a communication unit and an audio playback unit;
wherein the outputting the text content, comprises:
sending the text content to the communication unit, so that the communication unit transmits the text content to a terminal device, so as to cause the terminal device to convert the text content into audio and send the audio to the communication unit;
receiving the audio sent by the communication unit;
inputting the audio to the audio playback unit, so that the audio playback unit outputs the audio.

6. The method of claim 1, wherein after inputting the at least one image to be recognized into the preset text recognition model, so that the preset text recognition model recognizes the image to be recognized, so as to obtain text content, the method further comprises:
translating the text content into a preset language, thereby obtaining a translation result;
outputting the translation result.

7. The method of any one of claims 1 to 6, wherein the headset further comprises an audio input unit;
the method further comprises:
receiving speech information sent by the audio input unit, wherein the speech information is obtained by the audio input unit detecting user's speech;
inputting the speech information to a speech recognition model, so that the speech recognition model recognizes the speech information, to obtain a recognition result;
determining that the text recognition mode is triggered, in response to the recognition result comprising a preset field.

8. The method of any one of claims 1 to 6, wherein the headset further comprises a touch sensor;
the method further comprises:
receiving a touch signal sent by the touch sensor, wherein the touch signal is sent by the touch sensor detecting user's touch;
determining that the text recognition mode is triggered, in response to the touch signal meeting a preset trigger condition.

9. A headset comprising: a processing unit and a camera unit;
wherein the processing unit is configured to perform the headset-based text recognition method of any one of claims 1 to 8.

10. The headset of claim 9, wherein the camera unit comprises: an image acquisition unit and an image signal processor.

11. The headset of claim 9, further comprising: a communication unit, an audio playback unit, an audio input unit and a touch sensor.

12. The headset of any one of claims 9 to 11, wherein the camera unit is installed on a front side of the headset, wherein a shooting direction of the camera unit is consistent with an orientation of a user when wearing the headset.

13. A headset-based text recognition apparatus, wherein the headset comprises a processing unit and a camera unit, wherein the processing unit is locally deployed with a preset text recognition model,
the headset-based text recognition apparatus is applied to the processing unit, comprising:
an instruction sending module, configured to send a shooting instruction to a camera unit in response to it is detected that a text recognition mode is triggered, so that the camera unit acquires at least one image to be recognized of a recognized object according to the shooting instruction;
an image receiving module, configured to receive the at least one image to be recognized sent by the camera unit;
an image recognition module, configured to input the at least one image to be recognized into the preset text recognition model, so that the preset text recognition model recognizes the image to be recognized, so as to obtain text content; and
a content output module, configured to output the text content.

14. A computer-readable storage medium, wherein the computer-readable storage medium stores computer-executable instructions therein, which, when executed by a processor, implement the headset-based text recognition method of any one of claims 1 to 8.

15. A computer program product, comprising a computer program, wherein the computer program, when executed by a processor, implements the headset-based text recognition method of any one of claims 1 to 8.

## Amended claims

### Amended claims in accordance with Rule 137(2) EPC.

1. A headset-based text recognition method, wherein the headset comprises a processing unit and a camera unit, wherein the processing unit is locally deployed with a preset text recognition model, wherein a shooting direction of the camera unit is consistent with an orientation of a user when wearing the headset,
the method is applied to the processing unit, and comprises:
sending (S201) a shooting instruction to a camera unit in response to it being detected that a text recognition mode is triggered based on speech recognition or a touch trigger signal input by the user, so that the camera unit acquires at least one image to be recognized of a recognized object according to the shooting instruction;
receiving (S202) the at least one image to be recognized sent by the camera unit;
inputting (S203) the at least one image to be recognized into the preset text recognition model, so that the preset text recognition model recognizes the image to be recognized, so as to obtain text content; and
outputting (S204) the text content.

2. The method of claim 1, wherein the camera unit comprises an image acquisition unit and an image signal processor;
the sending (S201) a shooting instruction to a camera unit in response to it is detected that a text recognition mode is triggered, so that the camera unit acquires at least one image to be recognized of a recognized object according to the shooting instruction, comprises:
sending the shooting instruction to the image acquisition unit in response to it is detected that the text recognition mode is triggered, so that the image acquisition unit acquires at least one original image of the recognized object according to the shooting instruction, and send the at least one original image to the image signal processor, so that the image signal processor optimizes the at least one original image to obtain the at least one image to be recognized.

3. The method of claim 1, wherein the headset further comprises a communication unit;
wherein the outputting (S204) the text content, comprises:
sending (S204A) the text content to the communication unit, so that the communication unit transmits the text content to a terminal device, so as to cause the terminal device to output the text content.

4. The method of claim 1, wherein the headset further comprises an audio playback unit;
wherein the outputting (S204) the text content, comprises:
converting (S204B1) the text content into audio;
sending (S204B2) the audio to the audio playback unit, so that the audio playback unit outputs the audio.

5. The method of claim 1, wherein the headset further comprises a communication unit and an audio playback unit;
wherein the outputting (S204) the text content, comprises:
sending (S204C1) the text content to the communication unit, so that the communication unit transmits the text content to a terminal device, so as to cause the terminal device to convert the text content into audio and send the audio to the communication unit;
receiving (S204C2) the audio sent by the communication unit;
inputting (S204C3) the audio to the audio playback unit, so that the audio playback unit outputs the audio.

6. The method of claim 1, wherein after inputting (S203) the at least one image to be recognized into the preset text recognition model, so that the preset text recognition model recognizes the image to be recognized, so as to obtain text content, the method further comprises:
translating (S221) the text content into a preset language, thereby obtaining a translation result;
outputting (S222) the translation result.

7. The method of any one of claims 1 to 6, wherein the headset further comprises an audio input unit;
the method further comprises:
receiving (S230) speech information sent by the audio input unit, wherein the speech information is obtained by the audio input unit detecting user's speech;
inputting (S231) the speech information to a speech recognition model, so that the speech recognition model recognizes the speech information, to obtain a recognition result;
determining (S232) that the text recognition mode is triggered, in response to the recognition result comprising a preset field.

8. The method of any one of claims 1 to 6, wherein the headset further comprises a touch sensor;
the method further comprises:
receiving (S240) a touch signal sent by the touch sensor, wherein the touch signal is sent by the touch sensor detecting user's touch;
determining (S241) that the text recognition mode is triggered, in response to the touch signal meeting a preset trigger condition.

9. A headset comprising: a processing unit and a camera unit;
wherein the processing unit is configured to perform the headset-based text recognition method of any one of claims 1 to 8.

10. The headset of claim 9, wherein the camera unit comprises: an image acquisition unit and an image signal processor.

11. The headset of claim 9, further comprising: a communication unit, an audio playback unit, an audio input unit and a touch sensor.

12. The headset of any one of claims 9 to 11, wherein the camera unit is installed on a front side of the headset.

13. A headset-based text recognition apparatus, wherein the headset comprises a processing unit and a camera unit, wherein the processing unit is locally deployed with a preset text recognition model, wherein a shooting direction of the camera unit is consistent with an orientation of a user when wearing the headset,
the headset-based text recognition apparatus is applied to the processing unit, comprising:
an instruction sending module (301), configured to send a shooting instruction to a camera unit in response to it being detected that a text recognition mode is triggered based on speech recognition or a touch trigger signal input by the user, so that the camera unit acquires at least one image to be recognized of a recognized object according to the shooting instruction;
an image receiving module (302), configured to receive the at least one image to be recognized sent by the camera unit;
an image recognition module (303), configured to input the at least one image to be recognized into the preset text recognition model, so that the preset text recognition model recognizes the image to be recognized, so as to obtain text content; and
a content output module (304), configured to output the text content.

14. A computer-readable storage medium, wherein the computer-readable storage medium stores computer-executable instructions therein, which, when executed by a processor, implement the headset-based text recognition method of any one of claims 1 to 8.

15. A computer program product, comprising a computer program, wherein the computer program, when executed by a processor, implements the headset-based text recognition method of any one of claims 1 to 8.
